# EUROPEAN PATENT APPLICATION

(11) **EP 4 149 077 A1**
(43) Date of publication of application: **15.03.2023**
(21) Application number: 21195488.8
(22) Date of filing: 08.09.2021
(51) Int. Cl.: H04L 41/14, H04W 24/02

(54) **APPARATUS, METHOD, AND COMPUTER PROGRAM**

(71) Applicant: Nokia Technologies Oy, 02610 Espoo (FI)
(72) Inventor: KHARE, SAURABH, 560005 Bangalore (IN); GUPTA, Pallab, 560087 Bangalore (IN); JERICHOW, Anja, 85567 Grafing bei München (DE); KUNZMANN, Gerald, 81541 Munich (DE); KAHN, Colin, Morris Plains, 07950 (US); LAIR, Yannick, 78960 Voisins le Bretonneux (FR)
(74) Representative: Nokia EPO representatives

(57) **Abstract**

The disclosure relates to a source apparatus comprising at least one processor and at least one memory including computer code for one or more programs, the at least one memory and the computer code configured, with the at least one processor, to cause the apparatus at least to: receive (800) instructions to perform data collection, analytics generation or model training; determine (802) to transfer the performing of a first part of the data collection, analytics generation or model training to a target apparatus; and perform (804) a second part of the data collection, analytics generation or model training.

## Description

### Field of the disclosure

The present disclosure relates to an apparatus, a method, and a computer program for partially transferring the performing of data collection, analytics generation and/or model training in a communication system.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

### Summary

According to an aspect there is provided a source apparatus comprising means for: receiving instructions to perform data collection, analytics generation or model training; determining to transfer the performing of a first part of the data collection, analytics generation or model training to a target apparatus; and performing a second part of the data collection, analytics generation or model training.

The source apparatus may comprise means for: receiving instructions to perform data collection, analytics generation or model training related to a group of user equipment; determining to transfer the performing of a first part of the data collection, analytics generation or model training related to a first part of the group of user equipment to the target apparatus; and performing a second part of the data collection, analytics generation or model training related to a second part of the group of user equipment.

The source apparatus may be different from (e.g. may not be) an aggregator apparatus; the target apparatus may be different from (e.g. may not be) an aggregator apparatus. The source apparatus may comprise means for: discovering an aggregator apparatus; sending, to the aggregator apparatus, a request to transfer the performing of the first part of the data collection, analytics generation or model training to the target apparatus; and sending, to the aggregator apparatus, results of the second part of the data collection, analytics generation or model training.

An aggregator apparatus may be capable of aggregating results of the first part of the data collection, analytics generation or model training with results of the second part of the data collection, analytics generation or model training.

The request may be further to aggregate results of the first part of the data collection, analytics generation or model training with results of the second part of the data, analytics or model training.

The source apparatus may be an aggregator apparatus. The source apparatus may comprise means for: sending, to the target apparatus, a request to transfer the performing of the first part of the data collection, analytics generation or model training to the target apparatus; receiving, from the target apparatus, results of the first part of the data collection, analytics generation or model training; aggregating results of the first part of the data collection, analytics generation or model training with results of the second part of the data, analytics or model training.

The source apparatus may comprise means for: sending, to a consumer, results of the aggregation of results of the first part of the data collection, analytics generation or model training and results of the second part of the data collection or analytics generation or model training.

The source apparatus may be different from (e.g. may not be) an aggregator apparatus; the target apparatus may be an aggregator apparatus; and the source apparatus may comprise means for: sending, to the target apparatus, a request to transfer the performing of the first part of the data collection, analytics generation or model training to the target apparatus.

The request may be further to aggregate results of the first part of the data collection, analytics generation or model training and results of a second part of the data collection, analytics generation or model training.

The source apparatus may comprise means for: sending, to the target apparatus, results of the second part of the data or analytics collection or model training.

According to an aspect there is provided a source apparatus comprising at least one processor and at least one memory including computer code for one or more programs, the at least one memory and the computer code configured, with the at least one processor, to cause the source apparatus at least to: receive instructions to perform data collection, analytics generation or model training; determine to transfer the performing of a first part of the data collection, analytics generation or model training to a target apparatus; and perform a second part of the data collection, analytics generation or model training.

The at least one memory and the computer code may be configured, with the at least one processor, to cause the source apparatus at least to: receive instructions to perform data collection, analytics generation or model training related to a group of user equipment; determine to transfer the performing of a first part of the data collection, analytics generation or model training related to a first part of the group of user equipment to the target apparatus; and perform a second part of the data collection, analytics generation or model training related to a second part of the group of user equipment.

The source apparatus may be different from (e.g. may not be) an aggregator apparatus; the target apparatus may be different from (e.g. may not be) an aggregator apparatus. The at least one memory and the computer code may be configured, with the at least one processor, to cause the source apparatus at least to: discover an aggregator apparatus; send, to the aggregator apparatus, a request to transfer the performing of the first part of the data collection, analytics generation or model training to the target apparatus; and send, to the aggregator apparatus, results of the second part of the data collection, analytics generation or model training.

An aggregator apparatus may be capable of aggregating results of the first part of the data collection, analytics generation or model training with results of the second part of the data collection, analytics generation or model training.

The request may be further to aggregate results of the first part of the data collection, analytics generation or model training with results of the second part of the data, analytics or model training.

The source apparatus may be an aggregator apparatus. The at least one memory and the computer code may be configured, with the at least one processor, to cause the source apparatus at least to: send, to the target apparatus, a request to transfer the performing of the first part of the data collection, analytics generation or model training to the target apparatus; receive, from the target apparatus, results of the first part of the data collection, analytics generation or model training; aggregate results of the first part of the data collection, analytics generation or model training with results of the second part of the data, analytics or model training.

The at least one memory and the computer code may be configured, with the at least one processor, to cause the source apparatus at least to: send, to a consumer, results of the aggregation of results of the first part of the data collection, analytics generation or model training and results of the second part of the data collection or analytics generation or model training.

The source apparatus may be different from (e.g. may not be) an aggregator apparatus; the target apparatus may be an aggregator apparatus; and the at least one memory and the computer code are configured, with the at least one processor, to cause the source apparatus at least to: send, to the target apparatus, a request to transfer the performing of the first part of the data collection, analytics generation or model training to the target apparatus.

The request may be further to aggregate results of the first part of the data collection, analytics generation or model training and results of a second part of the data collection, analytics generation or model training.

The at least one memory and the computer code may be configured, with the at least one processor, to cause the source apparatus at least to: send, to the target apparatus, results of the second part of the data or analytics collection or model training.

According to an aspect there is provided a source apparatus comprising circuitry configured to: receive instructions to perform data collection, analytics generation or model training; determine to transfer the performing of a first part of the data collection, analytics generation or model training to a target apparatus; and perform a second part of the data collection, analytics generation or model training.

The source apparatus may comprise circuitry configured to: receive instructions to perform data collection, analytics generation or model training related to a group of user equipment; determine to transfer the performing of a first part of the data collection, analytics generation or model training related to a first part of the group of user equipment to the target apparatus; and perform a second part of the data collection, analytics generation or model training related to a second part of the group of user equipment.

The source apparatus may be different from (e.g. may not be) an aggregator apparatus; the target apparatus may be different from (e.g. may not be) an aggregator apparatus. The source apparatus may comprise circuitry configured to: discover an aggregator apparatus; send, to the aggregator apparatus, a request to transfer the performing of the first part of the data collection, analytics generation or model training to the target apparatus; and send, to the aggregator apparatus, results of the second part of the data collection, analytics generation or model training.

An aggregator apparatus may be capable of aggregating results of the first part of the data collection, analytics generation or model training with results of the second part of the data collection, analytics generation or model training.

The request may be further to aggregate results of the first part of the data collection, analytics generation or model training with results of the second part of the data, analytics or model training.

The source apparatus may be an aggregator apparatus. The source apparatus may comprise circuitry configured to: send, to the target apparatus, a request to transfer the performing of the first part of the data collection, analytics generation or model training to the target apparatus; receive, from the target apparatus, results of the first part of the data collection, analytics generation or model training; aggregate results of the first part of the data collection, analytics generation or model training with results of the second part of the data, analytics or model training.

The source apparatus may comprise circuitry configured to: send, to a consumer, results of the aggregation of results of the first part of the data collection, analytics generation or model training and results of the second part of the data collection or analytics generation or model training.

The source apparatus may be different from (e.g. may not be) an aggregator apparatus; the target apparatus may be an aggregator apparatus; and the source apparatus may comprise circuitry configured to: send, to the target apparatus, a request to transfer the performing of the first part of the data collection, analytics generation or model training to the target apparatus.

The request may be further to aggregate results of the first part of the data collection, analytics generation or model training and results of a second part of the data collection, analytics generation or model training.

The source apparatus may comprise circuitry configured to: send, to the target apparatus, results of the second part of the data or analytics collection or model training.

According to an aspect there is provided a method comprising: receiving instructions to perform data collection, analytics generation or model training; determining to transfer the performing of a first part of the data collection, analytics generation or model training to a target apparatus; and performing a second part of the data collection, analytics generation or model training.

The method may be performed by a source apparatus.

The method may comprise: receiving instructions to perform data collection, analytics generation or model training related to a group of user equipment; determining to transfer the performing of a first part of the data collection, analytics generation or model training related to a first part of the group of user equipment to the target apparatus; and performing a second part of the data collection, analytics generation or model training related to a second part of the group of user equipment.

The source apparatus may be different from (e.g. may not be) an aggregator apparatus; the target apparatus may be different from (e.g. may not be) an aggregator apparatus. The method may comprise: discovering an aggregator apparatus; sending, to the aggregator apparatus, a request to transfer the performing of the first part of the data collection, analytics generation or model training to the target apparatus; and sending, to the aggregator apparatus, results of the second part of the data collection, analytics generation or model training.

An aggregator apparatus may be capable of aggregating results of the first part of the data collection, analytics generation or model training with results of the second part of the data collection, analytics generation or model training.

The request may be further to aggregate results of the first part of the data collection, analytics generation or model training with results of the second part of the data, analytics or model training.

The source apparatus may be an aggregator apparatus. The method may comprise: sending, to the target apparatus, a request to transfer the performing of the first part of the data collection, analytics generation or model training to the target apparatus; receiving, from the target apparatus, results of the first part of the data collection, analytics generation or model training; aggregating results of the first part of the data collection, analytics generation or model training with results of the second part of the data, analytics or model training.

The method may comprise: sending, to a consumer, results of the aggregation of results of the first part of the data collection, analytics generation or model training and results of the second part of the data collection or analytics generation or model training.

The source apparatus may be different from (e.g. may not be) an aggregator apparatus; the target apparatus may be an aggregator apparatus; and the method may comprise: sending, to the target apparatus, a request to transfer the performing of the first part of the data collection, analytics generation or model training to the target apparatus.

The request may be further to aggregate results of the first part of the data collection, analytics generation or model training and results of a second part of the data collection, analytics generation or model training.

The method may comprise: sending, to the target apparatus, results of the second part of the data or analytics collection or model training.

According to an aspect there is provided a computer program comprising computer executable code which when run on at least one processor is configured to: receive instructions to perform data collection, analytics generation or model training; determine to transfer the performing of a first part of the data collection, analytics generation or model training to a target apparatus; and perform a second part of the data collection, analytics generation or model training.

The at least one processor may be part of a source apparatus.

The computer program may comprise computer executable code which when run on at least one processor is configured to: receive instructions to perform data collection, analytics generation or model training related to a group of user equipment; determine to transfer the performing of a first part of the data collection, analytics generation or model training related to a first part of the group of user equipment to the target apparatus; and perform a second part of the data collection, analytics generation or model training related to a second part of the group of user equipment.

The source apparatus may be different from (e.g. may not be) an aggregator apparatus; the target apparatus may be different from (e.g. may not be) an aggregator apparatus. The computer program may comprise computer executable code which when run on at least one processor is configured to: discover an aggregator apparatus; send, to the aggregator apparatus, a request to transfer the performing of the first part of the data collection, analytics generation or model training to the target apparatus; and send, to the aggregator apparatus, results of the second part of the data collection, analytics generation or model training.

An aggregator apparatus may be capable of aggregating results of the first part of the data collection, analytics generation or model training with results of the second part of the data collection, analytics generation or model training.

The request may be further to aggregate results of the first part of the data collection, analytics generation or model training with results of the second part of the data, analytics or model training.

The source apparatus may be an aggregator apparatus. The computer program may comprise computer executable code which when run on at least one processor is configured to: send, to the target apparatus, a request to transfer the performing of the first part of the data collection, analytics generation or model training to the target apparatus; receive, from the target apparatus, results of the first part of the data collection, analytics generation or model training; aggregate results of the first part of the data collection, analytics generation or model training with results of the second part of the data, analytics or model training.

The computer program may comprise computer executable code which when run on at least one processor is configured to: send, to a consumer, results of the aggregation of results of the first part of the data collection, analytics generation or model training and results of the second part of the data collection or analytics generation or model training.

The source apparatus may be different from (e.g. may not be) an aggregator apparatus; the target apparatus may be an aggregator apparatus; and the computer program may comprise computer executable code which when run on at least one processor is configured to: send, to the target apparatus, a request to transfer the performing of the first part of the data collection, analytics generation or model training to the target apparatus.

The request may be further to aggregate results of the first part of the data collection, analytics generation or model training and results of a second part of the data collection, analytics generation or model training.

The computer program may comprise computer executable code which when run on at least one processor is configured to: send, to the target apparatus, results of the second part of the data or analytics collection or model training.

According to an aspect there is provided a target apparatus comprising means for: receiving a request to transfer the performing of a first part of data collection, analytics generation or model training to the target apparatus; and perform the first part of data collection, analytics generation or model training.

A source apparatus may be different from (e.g. may not be) an aggregator apparatus; the target apparatus may be different from (e.g. may not be) an aggregator apparatus; and the target apparatus may comprise means for: receiving, from an aggregator apparatus, analytics generation or model training, the request to transfer the performing of the first part of the data collection, analytics generation or model training to the target apparatus; performing the first part of the data collection, analytics generation or model training; and sending, to the aggregator apparatus, results of the first part of the data collection, analytics generation or model training.

A source apparatus may be an aggregator apparatus.

The target apparatus may comprise means for: receiving, from the source apparatus, the request to transfer the performing of the first part of the data collection, analytics generation or model training to the target apparatus; performing the first part of the data collection, analytics generation or model training; and sending, to the source apparatus, results of the first part of the data collection, analytics generation or model training.

A source apparatus may be different from (e.g. may not be) an aggregator apparatus; the target apparatus may be an aggregator apparatus; and the target apparatus may comprise means for: receiving, from the source apparatus, the request to transfer the performing of the first part of the data collection, analytics generation or model training to the apparatus and to aggregate results of the first part of the data collection, analytics generation or model training and the second part of the data collection, analytics generation or model training; performing the first part of the data collection, analytics generation or model training; receiving, from the source apparatus, results of the second part of the data collection, analytics generation or model training; aggregating results of the first part of the data collection, analytics generation or model training with results of the second part of the data collection, analytics generation or model training.

The target apparatus may comprise means for: sending, to a consumer, results of the aggregation of results of the first part of the data collection, analytics generation or model training with the second part of the data collection, analytics generation or model training.

According to an aspect there is provided a target apparatus comprising at least one processor and at least one memory including computer code for one or more programs, the at least one memory and the computer code configured, with the at least one processor, to cause the target apparatus at least to: receive a request to transfer the performing of a first part of data collection, analytics generation or model training to the target apparatus; and perform the first part of data collection, analytics generation or model training.

A source apparatus may be different from (e.g. may not be) an aggregator apparatus; the target apparatus may be different from (e.g. may not be) an aggregator apparatus; and the at least one memory and the computer code may be configured, with the at least one processor, to cause the target apparatus at least to: receive, from an aggregator apparatus, analytics generation or model training, the request to transfer the performing of the first part of the data collection, analytics generation or model training to the target apparatus; perform the first part of the data collection, analytics generation or model training; and send, to the aggregator apparatus, results of the first part of the data collection, analytics generation or model training.

A source apparatus may be an aggregator apparatus.

The at least one memory and the computer code may be configured, with the at least one processor, to cause the target apparatus at least to: receive, from the source apparatus, the request to transfer the performing of the first part of the data collection, analytics generation or model training to the target apparatus; perform the first part of the data collection, analytics generation or model training; and send, to the source apparatus, results of the first part of the data collection, analytics generation or model training.

A source apparatus may be different from (e.g. may not be) an aggregator apparatus; the target apparatus may be an aggregator apparatus; and the at least one memory and the computer code may be configured, with the at least one processor, to cause the target apparatus at least to: receive, from the source apparatus, the request to transfer the performing of the first part of the data collection, analytics generation or model training to the apparatus and to aggregate results of the first part of the data collection, analytics generation or model training and the second part of the data collection, analytics generation or model training; perform the first part of the data collection, analytics generation or model training; receive, from the source apparatus, results of the second part of the data collection, analytics generation or model training; aggregate results of the first part of the data collection, analytics generation or model training with results of the second part of the data collection, analytics generation or model training.

The at least one memory and the computer code may be configured, with the at least one processor, to cause an apparatus at least to: send, to a consumer, results of the aggregation of results of the first part of the data collection, analytics generation or model training with the second part of the data collection, analytics generation or model training.

According to an aspect there is provided a target apparatus comprising circuitry configured to: receive a request to transfer the performing of a first part of data collection, analytics generation or model training to the target apparatus; and perform the first part of data collection, analytics generation or model training.

A source apparatus may be different from (e.g. may not be) an aggregator apparatus; the target apparatus may not be an aggregator apparatus; and the target apparatus may comprise circuitry configured to: receive, from an aggregator apparatus, analytics generation or model training, the request to transfer the performing of the first part of the data collection, analytics generation or model training to the target apparatus; perform the first part of the data collection, analytics generation or model training; and send, to the aggregator apparatus, results of the first part of the data collection, analytics generation or model training.

A source apparatus may be an aggregator apparatus.

The target apparatus may comprise circuitry configured to: receive, from the source apparatus, the request to transfer the performing of the first part of the data collection, analytics generation or model training to the target apparatus; perform the first part of the data collection, analytics generation or model training; and send, to the source apparatus, results of the first part of the data collection, analytics generation or model training.

A source apparatus may be different from (e.g. may not be) an aggregator apparatus; the target apparatus may be an aggregator apparatus; and the target apparatus may comprise circuitry configured to: receive, from the source apparatus, the request to transfer the performing of the first part of the data collection, analytics generation or model training to the apparatus and to aggregate results of the first part of the data collection, analytics generation or model training and the second part of the data collection, analytics generation or model training; perform the first part of the data collection, analytics generation or model training; receive, from the source apparatus, results of the second part of the data collection, analytics generation or model training; aggregate results of the first part of the data collection, analytics generation or model training with results of the second part of the data collection, analytics generation or model training.

The target apparatus may comprise circuitry configured to: send, to a consumer, results of the aggregation of results of the first part of the data collection, analytics generation or model training with the second part of the data collection, analytics generation or model training

According to an aspect there is provided a method comprising: receiving a request to transfer the performing of a first part of data collection, analytics generation or model training to a target apparatus; and perform the first part of data collection, analytics generation or model training.

The method may be performed by the target apparatus.

A source apparatus may be different from (e.g. may not be) an aggregator apparatus; the target apparatus may be different from (e.g. may not be) an aggregator apparatus; and the method may comprise: receiving, from an aggregator apparatus, analytics generation or model training, the request to transfer the performing of the first part of the data collection, analytics generation or model training to the target apparatus; performing the first part of the data collection, analytics generation or model training; and sending, to the aggregator apparatus, results of the first part of the data collection, analytics generation or model training.

A source apparatus may be an aggregator apparatus.

The method may comprise: receiving, from the source apparatus, the request to transfer the performing of the first part of the data collection, analytics generation or model training to the target apparatus; performing the first part of the data collection, analytics generation or model training; and sending, to the source apparatus, results of the first part of the data collection, analytics generation or model training.

A source apparatus may be different from (e.g. may not be) an aggregator apparatus; the target apparatus may be an aggregator apparatus; and the method may comprise: receiving, from the source apparatus, the request to transfer the performing of the first part of the data collection, analytics generation or model training to the apparatus and to aggregate results of the first part of the data collection, analytics generation or model training and the second part of the data collection, analytics generation or model training; performing the first part of the data collection, analytics generation or model training; receiving, from the source apparatus, results of the second part of the data collection, analytics generation or model training; aggregating results of the first part of the data collection, analytics generation or model training with results of the second part of the data collection, analytics generation or model training.

The method may comprise: sending, to a consumer, results of the aggregation of results of the first part of the data collection, analytics generation or model training with the second part of the data collection, analytics generation or model training

According to an aspect there is provided a computer program comprising computer executable code which when run on at least one processor is configured to: receive a request to transfer the performing of a first part of data collection, analytics generation or model training to a target apparatus; and perform the first part of data collection, analytics generation or model training.

The at least one processor may be part of a part of the target apparatus.

A source apparatus may be different from (e.g. may not be) an aggregator apparatus; the target apparatus may be different from (e.g. may not be) an aggregator apparatus; and the computer program may comprise computer executable code which when run on at least one processor is configured to: receive, from an aggregator apparatus, analytics generation or model training, the request to transfer the performing of the first part of the data collection, analytics generation or model training to the target apparatus; perform the first part of the data collection, analytics generation or model training; and send, to the aggregator apparatus, results of the first part of the data collection, analytics generation or model training.

A source apparatus may be an aggregator apparatus.

The computer program may comprise computer executable code which when run on at least one processor is configured to: receive, from the source apparatus, the request to transfer the performing of the first part of the data collection, analytics generation or model training to the target apparatus; perform the first part of the data collection, analytics generation or model training; and send, to the source apparatus, results of the first part of the data collection, analytics generation or model training.

A source apparatus may be different from (e.g. may not be) an aggregator apparatus; the target apparatus may be an aggregator apparatus; and the computer program may comprise computer executable code which when run on at least one processor is configured to: receive, from the source apparatus, the request to transfer the performing of the first part of the data collection, analytics generation or model training to the apparatus and to aggregate results of the first part of the data collection, analytics generation or model training and the second part of the data collection, analytics generation or model training; perform the first part of the data collection, analytics generation or model training; receive, from the source apparatus, results of the second part of the data collection, analytics generation or model training; aggregate results of the first part of the data collection, analytics generation or model training with results of the second part of the data collection, analytics generation or model training.

The computer program may comprise computer executable code which when run on at least one processor is configured to: send, to a consumer, results of the aggregation of results of the first part of the data collection, analytics generation or model training with the second part of the data collection, analytics generation or model training

According to an aspect there is provided an apparatus comprising means for: receiving, from a source apparatus, a request to transfer the performing of a first part of data collection, analytics generation or model training to a target apparatus.

The request may be further to aggregate the first part of data collection, analytics generation, or model training with a second part of the data collection, analytics generation or model training.

The aggregator apparatus may comprise means for: receiving, from the target apparatus, results of the first part of the data collection, analytics generation or model training; receiving, from the source apparatus, results of the second part of the data collection, analytics generation or model training; and aggregating results of the first part of the data collection, analytics generation or model training with results of the second part of the data collection, analytics generation or model training.

The aggregator apparatus may comprise means for: sending, to a consumer, results of the aggregation of results of the first part of the data collection, analytics generation or model training and results of the second part of the data collection, analytics generation or model training.

According to an aspect there is provided an aggregator apparatus comprising at least one processor and at least one memory including computer code for one or more programs, the at least one memory and the computer code configured, with the at least one processor, to cause the aggregator apparatus at least to: receive, from a source apparatus, a request to transfer the performing of a first part of data collection, analytics generation or model training to a target apparatus.

The request may be further to aggregate the first part of data collection, analytics generation, or model training with a second part of the data collection, analytics generation or model training.

The at least one memory and the computer code may be configured, with the at least one processor, to cause the aggregator apparatus at least to: receive, from the target apparatus, results of the first part of the data collection, analytics generation or model training; receive, from the source apparatus, results of the second part of the data collection, analytics generation or model training; and aggregate results of the first part of the data collection, analytics generation or model training with results of the second part of the data collection, analytics generation or model training.

The at least one memory and the computer code are configured, with the at least one processor, to cause the apparatus at least to: send, to a consumer, results of the aggregation of results of the first part of the data collection, analytics generation or model training and results of the second part of the data collection, analytics generation or model training.

According to an aspect there is provided an aggregator apparatus comprising circuitry configured to: receive, from a source apparatus, a request to transfer the performing of a first part of data collection, analytics generation or model training to a target apparatus.

The request may be further to aggregate the first part of data collection, analytics generation, or model training with a second part of the data collection, analytics generation or model training.

The aggregator apparatus may comprise circuitry configured to: receive, from the target apparatus, results of the first part of the data collection, analytics generation or model training; receive, from the source apparatus, results of the second part of the data collection, analytics generation or model training; and aggregate results of the first part of the data collection, analytics generation or model training with results of the second part of the data collection, analytics generation or model training.

The aggregator apparatus may comprise circuitry configured to: send, to a consumer, results of the aggregation of results of the first part of the data collection, analytics generation or model training and results of the second part of the data collection, analytics generation or model training.

According to an aspect there is provided a method comprising: receiving, from a source apparatus, a request to transfer the performing of a first part of data collection, analytics generation or model training to a target apparatus.

The method may be performed by an aggregator apparatus.

The request may be further to aggregate the first part of data collection, analytics generation, or model training with a second part of the data collection, analytics generation or model training.

The method may comprise: receiving, from the target apparatus, results of the first part of the data collection, analytics generation or model training; receiving, from the source apparatus, results of the second part of the data collection, analytics generation or model training; and aggregating results of the first part of the data collection, analytics generation or model training with results of the second part of the data collection, analytics generation or model training.

The method may comprise: sending, to a consumer, results of the aggregation of results of the first part of the data collection, analytics generation or model training and results of the second part of the data collection, analytics generation or model training.

According to an aspect there is provided a computer program comprising computer executable code which when run on at least one processor is configured to: receive, from a source apparatus, a request to transfer the performing of a first part of data collection, analytics generation or model training to a target apparatus.

The at least one processor may be part of an aggregator apparatus.

The request may be further to aggregate the first part of data collection, analytics generation, or model training with a second part of the data collection, analytics generation or model training.

The computer program may comprise computer executable code which when run on at least one processor is configured to: receive, from the target apparatus, results of the first part of the data collection, analytics generation or model training; receive, from the source apparatus, results of the second part of the data collection, analytics generation or model training; and aggregate results of the first part of the data collection, analytics generation or model training with results of the second part of the data collection, analytics generation or model training.

The computer program may comprise computer executable code which when run on at least one processor is configured to: send, to a consumer, results of the aggregation of results of the first part of the data collection, analytics generation or model training and results of the second part of the data collection, analytics generation or model training.

According to an aspect, there is provided a computer readable medium comprising program instructions stored thereon for performing at least one of the above methods. According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AMF:: Access and Mobility Management Function
- API:: Application Programming Interface
- BS:: Base Station
- CU:: Centralized Unit
- DL:: Downlink
- DU:: Distributed Unit
- gNB:: gNodeB
- GSM:: Global System for Mobile communication
- HSS:: Home Subscriber Server
- loT:: Internet of Things
- LTE:: Long Term Evolution
- MAC:: Medium Access Control
- MS:: Mobile Station
- MTC:: Machine Type Communication

- NEF:: Network Exposure Function
- NF:: Network Function
- NR:: New radio
- NRF:: Network Repository Function
- NWDAF:: Network Data Analytics Function
- PDU:: Packet Data Unit
- RAM:: Random Access Memory
- (R)AN:: (Radio) Access Network
- ROM:: Read Only Memory
- SMF:: Session Management Function
- TAI:: Tracking Area Identifier
- TR:: Technical Report
- TS:: Technical Specification
- UE:: User Equipment
- UMTS:: Universal Mobile Telecommunication System
- URI:: Uniform Resource Indicator
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4 shows a schematic representation of full transferring the performing of data collection, analytics generation and/or model training in a communication system;
Figure 5 shows a schematic representation of partially transferring the performing of data collection, analytics collection and/or model training in a communication system;
Figure 6 shows a signaling diagram of a process for partially transferring the performing of data collection, analytics generation and/or model training in a communication system, in a scenario where neither a source network function nor a target network function is an aggregator network function;
Figure 7 shows a signaling diagram of a process for partially transferring the performing of data collection, analytics generation and/or model training in a communication system, in a scenario where a source network function is an aggregator network function;
Figure 8 shows a block diagram of a method for partially transferring the performing of data collection, analytics generation and/or model training in a communication system, performed for example by a source network function;
Figure 9 shows a block diagram of a method for partially transferring the performing of data collection, analytics generation and/or model training in a communication system, performed for example by a target network function;
Figure 10 shows a block diagram of a method for partially transferring the performing of data collection, analytics generation and/or model training in a communication system, performed for example by an aggregator network function; and
Figure 11 shows a schematic representation of a non-volatile memory medium storing instructions which when executed by a processor allow a processor to perform one or more of the steps of the methods of Figures 8 to 10.

### Detailed Description of the Figures

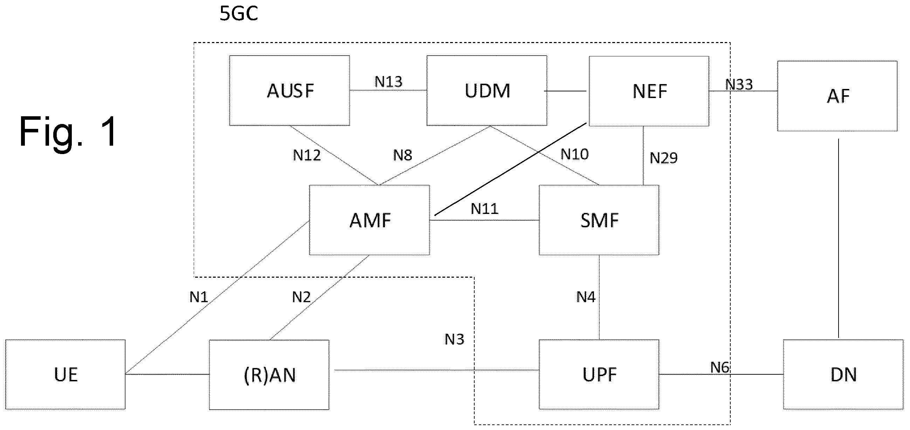

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a terminal, a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) and/or a network exposure function (NEF).

The 5GC may also comprise a network repository function (NRF), a network data analytics function (NWDAF) or other network functions (NF) non illustrated.

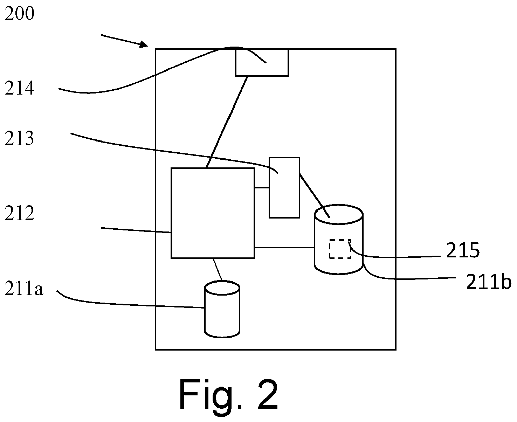

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

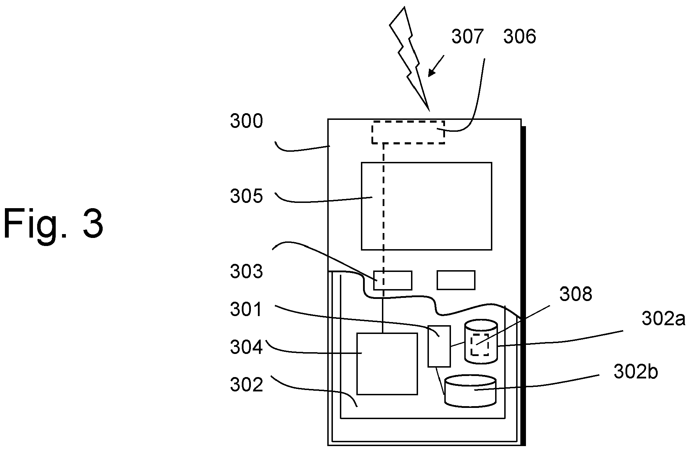

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

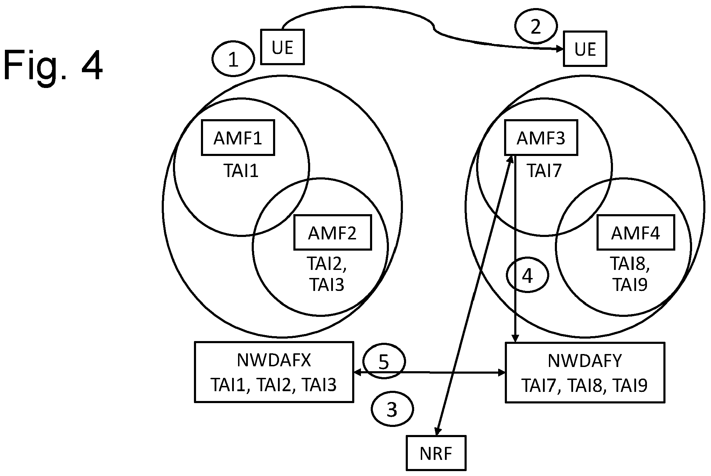

One or more aspects of this disclosure relate to NWDAF handover. NWDAF handover refers to an analytics subscription transfer from a source NWDAF to a target NWDAF. An analytics subscription may refer to a subscription from a consumer to perform analytics collection. Analytics subscription transfer is specified in 3GPP Release 17 TS 23.288 clause 6.1 B. An example of an analytics subscription transfer from a source NWDAF to a target NWDAF is illustrated on Figure 4.

Figure 4 illustrate a deployment comprising a NRF, a NWDAFX, a NWDAFY, a AMF1, a AMF2, a AMF3, a AMF4 and a UE. The NWDAFX may serve tracking areas identified by TAI1, TAI2 and TAI3. The AMF1 may serve tracking area identified by TAI1. The AMF2 may serve tracking areas identified TAI2 and TAI3. The NWDAFY may serve tracking areas identified by TAI7, TAI8 and TAI9. The AMF3 may serve tracking area identified by TAI7. The AMF4 may serve tracking areas identified TAI8 and TAI9. The UE may be located in tracking area identified by TAI1.

In step 1 a consumer may send a subscription request to a NWDAFX to instruct the NWDAFX to perform data collection and/or generate analytics and to receive reports or notifications with the data and/or analytics from the NWDAFX. The NWDAFX may perform one or more of data collection and analytics generation for the UE.

In step 2 the UE may move from the tracking area identified by TAI1 to the tracking area identified by TAI7.

In step 3 a UE context is transferred from the AMF1 to the AMF3. The AMF3 may determine that NWDAFX does not serve the tracking area identified by TAI7 and may query the NRF to determine an appropriate NWDAF.

In step 4 the AMF3 may determine that the NWDAFY serves the tracking area identified by TAI7. The AMF3 may send a request to the NWDAFY to transfer the analytics subscription from the NWDAFX to the NWDAFY.

In step 5 NWDAFY may obtains the analytics subscription from NWDAFX.

It may be noted that Figure 4 is for illustration only. For example, as described in clause 6.1B.2 of 3GPP 23.288, alternatively the NWDAFX may receive a UE mobility event notification, query the NRF and send a request to transfer the analytics subscription.

3GPP Release 17 currently only allows to transfer the whole analytics subscription or nothing (i.e. to transfer the whole data collection or analytics generation or nothing). 3GPP Release 17 does not address the problem of partial transfer of data collection or analytics generation.

If a source NWDAF performs data collection and/or analytics generation for a group of UE (comprising a plurality of UE) and a part of the group of UE moves to a tracking area served by a target NWDAF while another part of the group of UE remains in a tracking area served by a source NWDAF a problem may arise. There is no mechanism for partial transfer of data collection and/or analytics generation for the part of the group of UE that moved to the tracking area served by the target NWDAF

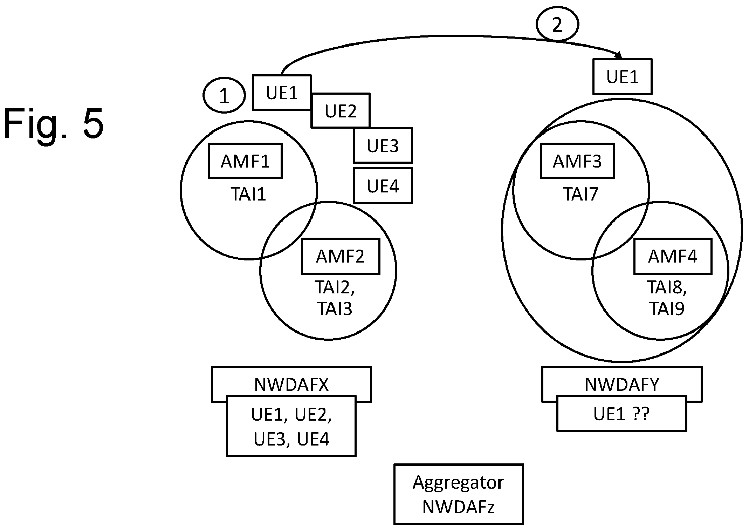

Figure 5 illustrate a deployment comprising a NWDAFX, a NWDAFY, a NWDAFZ, a AMF1, a AMF2, a AMF3, a AMF4 and a group of UE comprising UE1, UE2, UE3 and UE4. The NWDAFX may serve tracking areas identified by TAI1, TAI2 and TAI3. The AMF1 may serve tracking area identified by TAI1. The AMF2 may serve tracking areas identified TAI2 and TAI3. The NWDAFY may serve tracking areas identified by TAI7, TAI8 and TAI9. The AMF3 may serve tracking area identified by TAI7. The AMF4 may serve tracking areas identified TAI8 and TAI9. The UE1, UE2, UE3 and UE4 may be located in tracking area identified by TAI1.

In step 1 a consumer may send a subscription request to a NWDAFX to instruct the NWDAFX to perform data collection and/or analytics generation for the group of UE and to receive the data collected and/or analytics generated by the NWDAFX. The NWDAFX may perform data collection and/or analytics generation for the group of UE. For example, an organization may want to check the communication data and/or analytics for a group of employees, such as how much time employees spend making calls during office hours.

In step 2 the UE1 may move from the tracking area identified by TAI1 to the tracking area identified by TAI7. The UE2, the UE3 and the UE4 may remain in the tracking area identified by TAI1.

In this kind of scenario, the problem of partially transferring the performing of data collection and/or analytics generation would arise.

The NWDAFX would have to delegate performing the data collection and/or analytics generation for the UE1 to NWDAFY. The NWDAFX would continue performing the data collection and/or analytics generation for the UE2, UE3, and UE4.

Once data collection and/or analytics generation for the UE1 is performed by the NWDAFY, the NWDAFX would have to obtain data collected and/or analytics generated by the NWDAFY for the UE1 from NWDAFY and to aggregate data collected and/or analytics generated by the NWDAFY for the UE1 with data collected and/or analytics generated by the NWDAFX for the UE2, the UE3 or the UE4. The NWDAFX would then have to send results of the aggregation of data collected or analytics generated by the NWDAFY for the UE1 with data collected and/or analytics generated by the NWDAFX for the UE2, the UE3 and the UE4 to the consumer.

There is currently no solution available to solve the problem of partial transfer of data collection and/or analytics generation.

Likewise, 3GPP release 17 does not address the problem of partial transfer of model training. Due to federated learning, a partial transfer of model training may be required from the NWDAFX to the NWDAFY (i.e. whatever is learned by the NWDAFX may be transferred to the NWDAFY so that the NWDAFY may take over model training).

In step 1 a consumer may send a request to a NWDAFX to subscribe to perform model training for the group of UE and to receive the model from the NWDAFX. The NWDAFX may perform model training by collecting data for thirty days for the group of UE comprising the UE1, the UE2, the UE3 and the UE4.

In step 2 the UE1 may move from the tracking area identified by TAI1 to the tracking area identified by TAI7. The UE2, the UE3 and the UE4 may remain in the tracking area identified by TAI1.

In this kind of scenario, the problem of partial transfer of model training would arise.

The NWDAFX would have to delegate performing the model training for the UE1 to NWDAFY. The NWDAFX would continue performing the model training for the UE2, the UE3, and the UE4.

Once model training for the UE1 is performed by the NWDAFY, the NWDAFX would have to obtain the model trained by the NWDAFY for the UE1 from NWDAFY and aggregate the model trained by the NWDAFY for the UE1 with the model trained by the NWDAFX for the UE2, the UE3 and the UE4. The NWDAFX would then have to send results of the aggregation of the model trained by the NWDAFY for the UE1 with the model trained by the NWDAFX for the UE2, the UE3 and the UE4 to the consumer.

There is currently no solution available to solve the problem of partial transfer of model training.

In both the problem of partial transfer of data collection and/or analytics generation and the problem of partial transfer of model training, if the NWDAFX is not an aggregator NWDAF (i.e. a NWDAF with analytics aggregation capabilities, see TS23.288, clause 6.1.A.2), then the NWDAFX cannot do the aggregation operation. In that case, more coordination is required with other aggregator NWDAFs. However, this is not defined or possible using the current signaling of 3GPP Release 17.

One or more aspects of this disclosure provide a mechanism for partially transferring the performing of data collection and/or analytics generation for one or more UE in a group of UE from a source NWDAF to a target NWDAF and subsequent coordination between the source NWDAF and the target NWDAF to perform aggregation.

Although this disclosure relates to partially transferring the performing of data collection and/or analytics generation for one or more UE in a group of UE, it will be understood that one or more aspects may be generalised to other types of data collection and/or analytics generation. For example, partially transferring the performing of data collection and/or analytics generation for a group of NF or a group of network slices may occur when more than one NWDAF serves a tracking area of interest.

One or more aspects of this disclosure provide a mechanism for partially transferring the performing of model training for one or more UE in a group of UE from a source NWDAF to a target NWDAF and subsequent coordination between the source NWDAF and the target NWDAF to perform aggregation.

Although this disclosure relates to partial transfer of model training for one or more UE in a group of UE, it will be understood that one or more aspects may be generalised to other types of model training. For example, partial transferring the performing of model training for a group of NF or a group of network slices may occur when more than one NWDAF serves a tracking area of interest.

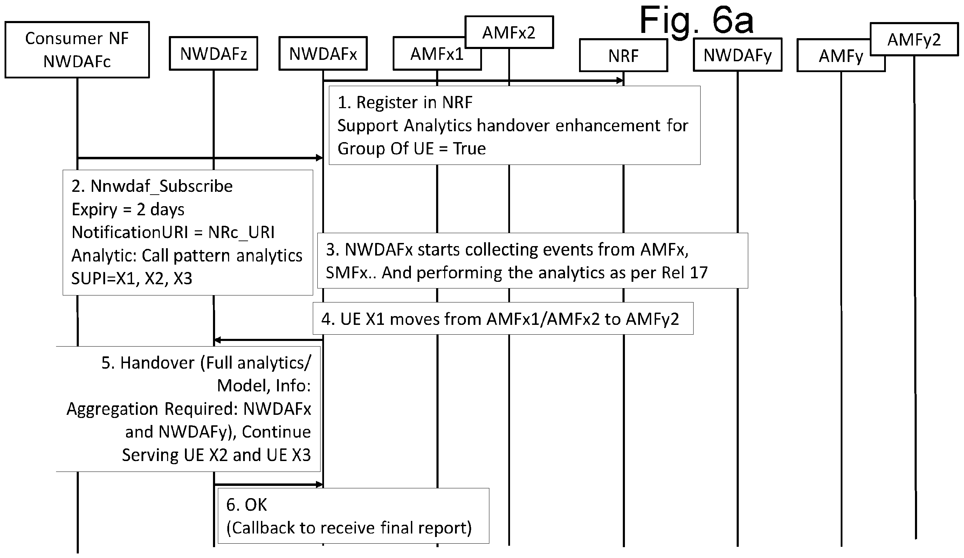

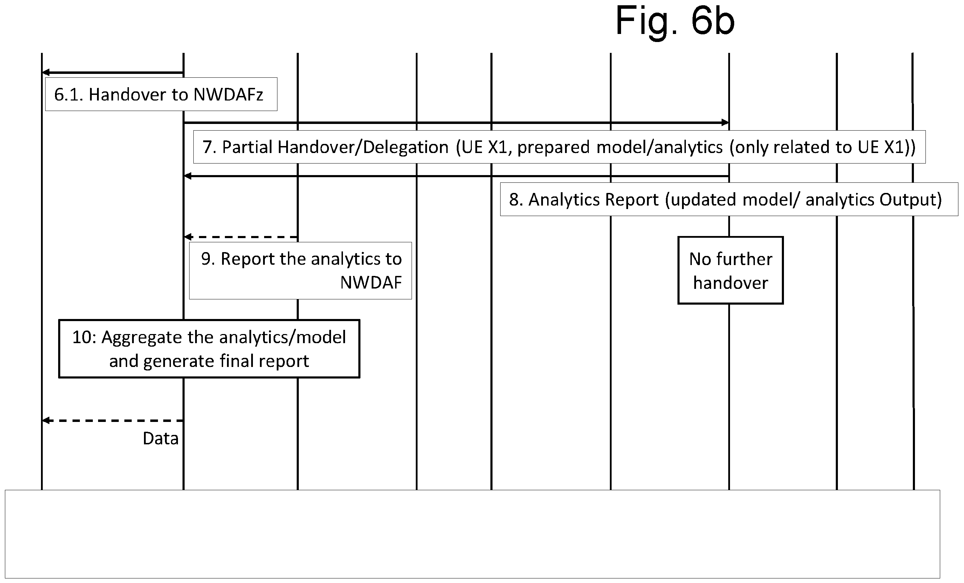

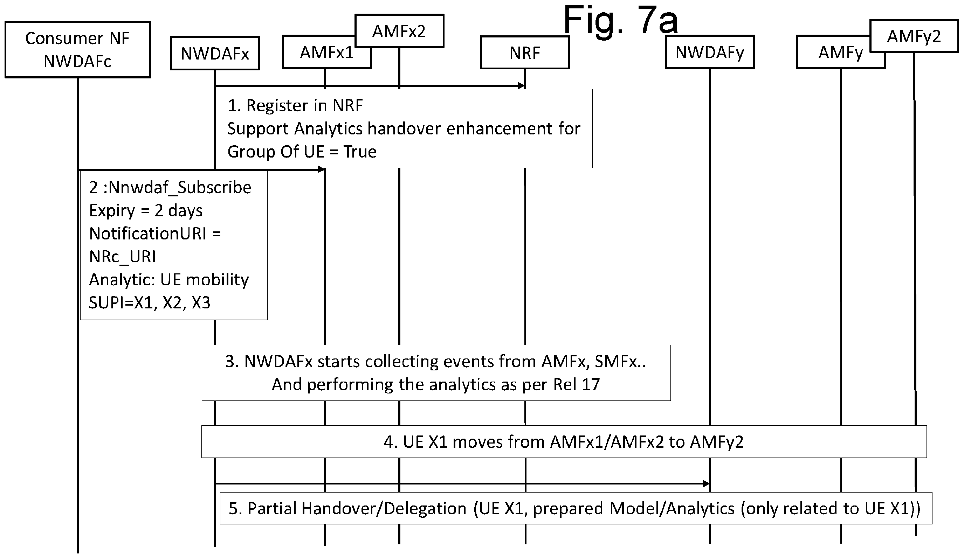

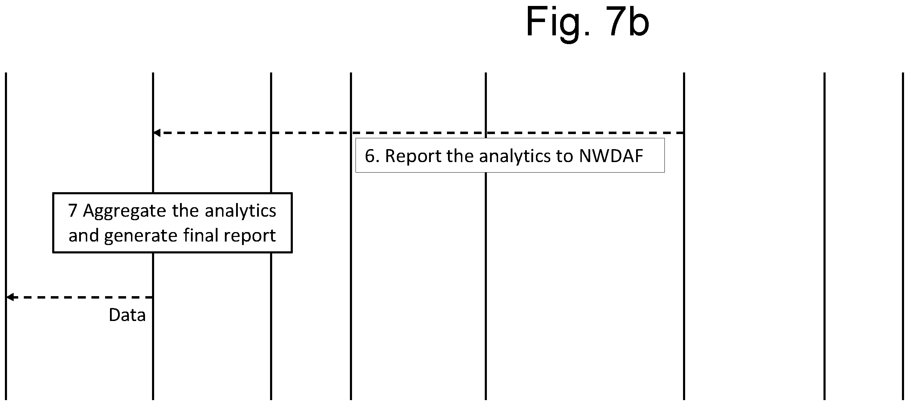

In the below cases (Figure 6 and Figure 7), a consumer (e.g. NWDAFC) may initially send a subscription request to the NWDAFX to instruct the NWDAFX to perform data collection, analytics generation and/or model training for a group of UE and to receive the data collected, analytics generated and/or the model trained by the NWDAFX. Due to UE mobility, some of the UE may move to the serving area of NWDAFY (i.e. the problem of partial transfer of data collection and/or analytics generation and the problem of partial transfer of model training may arise).

### Case 1: The source NWDAF (i.e. NWDAFX) is not an aggregator NWDAF and the target NWDAF (i.e. NWDAFY) is not an aggregator NWDAF

Figure 6 shows a signaling diagram of a process for partially transferring the performing of data collection, analytics generation and/or model training in a communication system, in a scenario where neither a source NWDAF nor a target NWDAF is an aggregator NWDAF.

In this case, a NWDAFZ supporting data collection, analytics generation, and/or model training aggregation (also referred as "aggregator NWDAF" or "central NWDAF" in TS23.288, clause 6.1A) may be required. The subscription may be transferred from the NWDAFX to the NWDAFZ so that the NWDAFZ may aggregate the data collected, analytics generated and/or the model trained by the NWDAFX and the NWDAFY for respective parts of a group of UE in respective tracking areas and may send results of the aggregation to the consumer.

In step 1 the NWDAFX may register with the NRF. The NWDAFX may indicate that it supports a new capability (e.g. "support analytics handover enhancement for a group of UE" = True). This allows the consumer to discover NWDAFs supporting the new capability and in particular NWDAFX.

In step 2 the consumer may send a subscription request to the NWDAFX to instruct the NWDAFX to perform data collection, analytics generation and/or model training for a group of UE and to receive the data collected, analytics generated and/or model trained by the NWDAFX.

For example, the consumer is interested in collecting data and/or generating analytics for a group of UE comprising UE X1, UE X2, and UE X3 for a period of time of two days and/or the consumer is interested in training a model where UE X1, UE X2 and UE X3 are involved.

In step 3 the NWDAFX may perform data collection, analytics generation and/or model training for the group of UE (as per 3GPP Release 16 or Release 17 standards).

In step 4 the NWDAFX may determine that UE X1 has moved from a tracking area served by the NWDAFX to a tracking area served by the NWDAFY. The determination may be based on a UE mobility event received from an AMF X1 or an AMF X2 serving the same tracking area as the NWDAFX. The NWDAFY is not an aggregator NWDAF and therefore the NWDAFX may need to discover an aggregator NWDAF.

In step 5 the NWDAFX may discover the NWDAFZ (aggregator NWDAF). The NWDAFX may send a request to the NWDAFZ to transfer the performing of the data collection, analytics generation and/or model training informing that NWDAFZ needs to perform the aggregation. The NWDAFX may continue performing data collection, analytics generation and/or model training for the UE X2 and the UE X3 and the UE X1 has moved to another area served by NWDAFY.

The NWDAFX may send the request using an existing analytics transfer API with one or more of the following parameters. Alternatively, the NWDAFX may send the request using a new analytics transfer API with one or more of the following parameters.
- Data information, analytics information and/or model information/ (3GPP Release 17 attributes)
- Metadata only related to UE X1
- Data, analytics and/or model only related to UE X1
- AggregationRequestAtTarget: True
- AggregationNWDAF:NWDAFZ
- ServingIndicator:
   UE X1: Move
      NWDAF Id: NWDAFY
   UE X2: Continue
      NWDAF Id: NWDAFX
   UE X3: Continue
      NWDAF Id: NWDAFX

Here the Servinglndicator indicates that the NWDAFX will continue performing data collection, analytics generation and/or model training for the UE X2 and the UE X3 but not for the UE X1 while requesting that NWDAFY (or another unspecified NWDAF) take over performing data collection, analytics generation and/or model training for the UE X1.

In step 6 the NWDAFZ may acknowledge reception of the request from the NWDAFX. The NWDAFZ may provide a uniform resource indicator to the NWDAFX to allow the NWDAFX to send the data collected, analytics generated and/or the model trained for the UE X2 and UE X3.

In step 6.1 the NWDAFZ may inform the consumer that the NWDAFZ has taken over the subscription request from the consumer to perform data collection, analytics generation and/or model training for the group of UE and to receive the data collected, analytics generated, and/or the model trained by the NWDAFX.

In step 7 the NWDAFZ may determine that the performing of the data collection, analytics generation and/or model training for the UE X1 is to be transferred to the NWDAFY based on the parameters provided in step 5. Alternatively, the NWDAFZ may determine that the data collection, analytics generation and/or model training for the UE X1 is to be transferred to the NWDAFY based on configuration or by querying the NRF. The NWDAFZ may send a request (e.g. delegation request) to the NWDAFY to transfer the performing of the data collection, analytics generation and/or model training for the UE X1 to the NWDAFY.

The NWDAFZ may send the request using an existing analytics transfer API with one or more of the following parameters. Alternatively, the NWDAFX may send the request using a new analytics transfer API with one or more of the following parameters.
- Data information, analytics information and/or model information/ (3GPP Release 17 attributes)
- Metadata only related to UE X1
- Data, analytics and/or model only related to UE X1
- AggregationRequestAtTarget: False
- AggregationNWDAF: NWDAFZ
- Servinglndicator:
   UE X1: Move
      NWDAF Id: NWDAFY
   UE X2: Continue
      NWDAF Id: NWDAFX
   UE X3: Continue
      NWDAF Id: NWDAFX

In step 8 the NWDAFY may perform the data collection, analytics generation and/or model training for the UE X1 and report to NWDAFZ. The NWDAFY may use the data collected, analytics generated and/or model trained for the UE X1 provided by the NWDAFZ.

The NWDAFY may be context-aware that a partial transfer of the performing of the data collection, analytics generation and/or model training for the UE X1 has occurred. Therefore, if the UE X1 moves to another tracking area not served by the NWDAFY, the NWDAFY may not transfer the performing of the data collection, analytics generation and/or model training for the UE X1 to another NWDAF serving the other tracking area not served by the NWDAFY. Instead, the NWDAFY may stop performing the data collection, analytics generation and/or model training for the UE X1 and may send a closure request to the NWDAFZ. The closure request may include one or more of the following parameters.
- new NWDAF-Id serving the UE X1 (optional)
- Indication of the UE X1 going out of the tracking area served by the NWDAFY
- Tracking area of the UE X1

Based on the new NWDAF-ID, or alternatively based on configuration at the NWDAFZ or a query sent to the NRF, the NWDAFZ may determine a new NWDAF for performing data collection, analytics generation and/or model training for the UE X1. The NWDAFZ may then transfer the performing of the data collection, analytics generation and/or model training for the UE X1 to the new NWDAF.

In step 9 the NWDAFZ may receive the collected data, generated analytics and/or the trained model for the UE X2 and UE X3.

In step 10 the NWDAFZ may aggregate the collected data, generated analytics and/or the trained model for the UE X1 and the collected data, generated analytics and/or the trained model for the UE X2 and UE X3. The NWDAFZ may send results of the aggregation to the consumer.

### Case 2: The source NWDAF (i.e. NWDAFX) is an aggregator NWDAF

Figure 7 shows a signaling diagram of a process for partial transfer of the performing of data collection, analytics generation and/or model training in a communication system, in a scenario where a source network function is an aggregator network function.

In this case, since NWDAFX supports data collection aggregation, analytics generation aggregation and/or model training aggregation, a NWDAFZ supporting data collection aggregation, analytics generation aggregation and/or model training aggregation (also referred as "aggregator NWDAF" or "central NWDAF" in TS23.288, clause 6.1A) is not required. The NWDAFX is already an aggregator NWDAF. The NWDAFX may aggregate the data collected, analytics generated and/or the model trained by the NWDAFX and the NWDAFY for respective parts of a group of UE in respective tracking areas and may send results of the aggregation to the consumer.

In step 1 the NWDAFX may register with the NRF. The NWDAFX may indicate that it supports a new capability (e.g. "support analytics handover enhancement for a group of UE" = True). This allows the consumer to discover NWDAFs supporting the new capability and in particular NWDAFX.

In step 2 the consumer may send a subscription request to the NWDAFX to instruct the NWDAFX to perform data collection, analytics generation and/or model training for a group of UE and to receive the data collected, the analytics generated and/or the model trained by the NWDAFX.

For example, the consumer is interested in collecting data and/or generating analytics for a group of UE comprising UE X1, UE X2, and UE X3 for a period of time of two days and/or the consumer is interested in training a model where UE X1, UE X2 and UE X3 are involved.

In step 3 the NWDAFX may perform data collection, analytics generation and/or model training for the group of UE (as per 3GPP Release 16 or Release 17 standards).

In step 4 the NWDAFX may determine that UE X1 has moved from a tracking area served by the NWDAFX to a tracking area served by the NWDAFY. The determination may be based on a UE mobility event received from an AMF X1 or an AMF X2 serving the same tracking area as the NWDAFX.

In step 5 the NWDAFX may send a request to the NWDAFY to transfer the performing of the data collection, analytics generation and/or model training for the UE X1 to NWDAFY. The NWDAFX may continue performing the data collection, analytics generation and/or model training for the UE X2 and the UE X3.

The NWDAFX may send the request using an existing analytics transfer API with one or more of the following parameters. Alternatively, the NWDAFX may send the request using a new analytics transfer API with one or more of the following parameters.
- Data information, analytics information and/or model information/ (Release 17 attributes)
- Metadata only related to UE X1
- Data, analytics and/or model only related to UE X1
- AggregationRequestAtTarget: False
- AggregationNWDAF: NWDAFX
- Servinglndicator:
   UE X1: Move
      NWDAF Id: NWDAFY
   UE X2: Continue
      NWDAF Id: NWDAFX
   UE X3: Continue
      NWDAF Id: NWDAFX

The NWDAFY may perform the data collection, analytics generation and/or model training for the UE X1. The NWDAFY may use the data collected, analytics generated and/or model training for the UE X1 provided by the NWDAFX.

The NWDAFY may be context-aware that a partial transfer of the performing of data collection, analytics generation and/or model training for the UE X1 has occurred. Therefore, if the UE X1 moves to another tracking area not served by the NWDAFY, the NWDAFY may not transfer the performing of the data collection, analytics generation and/or model training for the UE X1 to another NWDAF serving the other tracking area not served by the NWDAFY. Instead, the NWDAFY may stop performing the data collection, analytics generation and/or model training for the UE X1 and may send a closure request to the NWDAFX. The closure request may include one or more of the following parameters.
- new NWDAF-Id serving the UE X1 (optional)
- Indication of the UE X1 going out of the tracking area served by the NWDAFY
- Tracking area of the UE X1

Based on the new NWDAF-ID, or alternatively based on configuration at the NWDAFX or a query sent to the NRF, the NWDAFX may determine a new NWDAF for performing data collection, analytics generation and/or model training for the UE X1. The NWDAFX may then transfer the data collection, analytics generation and/or model training for the UE X1 to the new NWDAF.

In step 6 the NWDAFX may receive the collected data, generated analytics and/or the trained model for the UE X1.

In step 7 the NWDAFX may aggregate the collected data, generated analytics and/or the trained model for the UE X1 and the collected data, generated analytics and/or the trained model for the UE X2 and UE X3.

In step 8 the NWDAFX may send results of the aggregation to the consumer.

### Case 3: The target NWDAF (i.e. NWDAFY) is an aggregator NWDAF

In this case, since NWDAFY supports data collection aggregation, analytics generation aggregation and/or model training aggregation, a NWDAFZ supporting data collection aggregation, analytics generation aggregation and/or model training aggregation (also referred as "aggregator NWDAF" or "central NWDAF" in TS23.288, clause 6.1A) is not required.. The NWDAFY may aggregate the collected data, generated analytics and/or the model trained by the NWDAFX and the NWDAFY for respective parts of a group of UE in respective tracking areas and may send results of the aggregation to the consumer.

In step 1 the NWDAFX may register with the NRF. The NWDAFX may indicate that it supports a new capability (e.g. "support analytics handover enhancement for a group of UE" = True). This allows the consumer to discover NWDAFs supporting the new capability and in particular NWDAFX.

In step 2 the consumer may send a subscription request to the NWDAFX to instruct the NWDAFX to perform data collection, analytics generation and/or model training for a group of UE and to receive the data collected, analytics generated and/or the model trained by the NWDAFX.

For example, the consumer is interested in collecting data and/or generating analytics for a group of UE comprising UE X1, UE X2, and UE X3 for a period of time of two days and/or the consumer is interested in training a model where UE X1, UE X2 and UE X3 are involved.

In step 3 the NWDAFX may perform data collection, analytics generation and/or model training for the group of UE (as per Release 16 or Release 17 standards).

In step 4 the NWDAFX may determine that UE X1 has moved from a tracking area served by the NWDAFX to a tracking area served by the NWDAFY. The determination may be based on a UE mobility event received from an AMF X1 or an AMF X2 serving the same tracking area as the NWDAFX.

In step 5 the NWDAFX may send a request to the NWDAFY to transfer the performing of the data collection, analytics generation and/or model training for the UE X1 to NWDAFY. The NWDAFX may continue performing data collection, analytics generation and/or model training for the UE X2 and the UE X3.

The NWDAFX may send the request using an existing analytics transfer API with one or more of the following parameters. Alternatively, the NWDAFX may send the request using a new analytics transfer API with one or more of the following parameters.
- Data information, analytics information and/or model information/ (Release 17 attributes)
- Metadata only related to UE X1
- Data, analytics and/or model only related to UE X1
- AggregationRequestAtTarget: True
- AggregationNWDAF:NWDAFY
- Servinglndicator:
   UE X1: Move
      NWDAF Id: NWDAFY
   UE X2: Continue
      NWDAF Id: NWDAFX
   UE X3: Continue
      NWDAF Id: NWDAFX

Here the ServingIndicator indicates that the NWDAFX will continue performing data collection, analytics generation and/or model training for the UE X2 and the UE X3 but not for the UE X1 while requesting that the NWDAFY (or another unspecified NWDAF) takes over performing data collection, analytics generation and/or model training for the UE X1.

In step 6 the NWDAFY may acknowledge reception of the request from the NWDAFX. The NWDAFY may provide a uniform resource indicator to the NWDAFX to allow the NWDAFX to send the data collected, analytics generated and/or the model trained for the UE X2 and UE X3.

In step 6.1 the NWDAFY may inform the consumer that the NWDAFY has taken over the subscription request from the consumer to perform data collection, analytics generation and/or model training for the group of UE and to receive the data collected, analytics generated and/or the model trained by the NWDAFX.

In step 7 the NWDAFY may perform the data collection, analytics generation and/or model training for the UE X1. The NWDAFY may use the data collected, analytics generated and/or model trained for the UE X1 provided by the NWDAFX.

In step 8 the NWDAFY may receive the collected data, the generated analytics and/or the trained model for the UE X2 and UE X3.

In step 9 the NWDAFY may aggregate the collected data, the generated analytics and/or the trained model for the UE X1 and the collected data, generated analytics and/or the trained model for the UE X2 and UE X3. The NWDAFY may send results of the aggregation to the consumer.

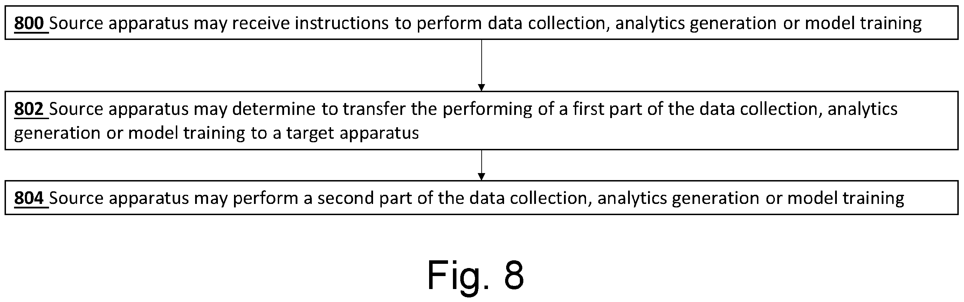

Figure 8 shows a block diagram of a method for partially transferring the performing of data collection, analytics generation and/or model training in a communication system, performed for example by a source apparatus (i.e. source network function such as NWDAFX).

In step 800 the source apparatus may receive instructions to perform data collection, analytics generation or model training.

In step 802 the source apparatus may determine to transfer the performing of a first part of the data collection, analytics generation or model training to a target apparatus.

In step 804 the source apparatus may perform a second part of the data collection, analytics generation or model training.

The source apparatus may receive instructions to perform data collection, analytics generation or model training related to a group of user equipment. The source apparatus may determine to transfer the performing of a first part of the data collection, analytics generation or model training related to a first part of the group of user equipment to the target apparatus. The source apparatus may perform a second part of the data collection, analytics generation or model training related to a second part of the group of user equipment.

The source apparatus may not be an aggregator apparatus. The target apparatus may not be an aggregator apparatus. The source apparatus may discover an aggregator apparatus. The source apparatus may send, to the aggregator apparatus, a request to transfer the performing of the first part of the data collection, analytics generation or model training to the target apparatus. The source apparatus may send, to the aggregator apparatus, results of the second part of the data collection, analytics generation or model training.

An aggregator apparatus may be capable of aggregating results of the first part of the data collection, analytics generation or model training with results of the second part of the data collection, analytics generation or model training.

The request may be further to aggregate results of the first part of the data collection, analytics generation or model training with results of the second part of the data, analytics or model training.

The source apparatus may be an aggregator apparatus. The source apparatus may send, to the target apparatus, a request to transfer the performing of the first part of the data collection, analytics generation or model training to the target apparatus. The source apparatus may receive, from the target apparatus, results of the first part of the data collection, analytics generation or model training. The source apparatus may aggregate results of the first part of the data collection, analytics generation or model training with results of the second part of the data, analytics or model training.

The source apparatus may send, to a consumer, results of the aggregation of results of the first part of the data collection, analytics generation or model training and results of the second part of the data collection or analytics generation or model training.

The source apparatus may not be an aggregator apparatus. The target apparatus may be an aggregator apparatus. The source apparatus may send, to the target apparatus, a request to transfer the performing of the first part of the data collection, analytics generation or model training to the target apparatus.

The request may be further to aggregate results of the first part of the data collection, analytics generation or model training and results of a second part of the data collection, analytics generation or model training.

The source apparatus may send, to the target apparatus, results of the second part of the data or analytics collection or model training.

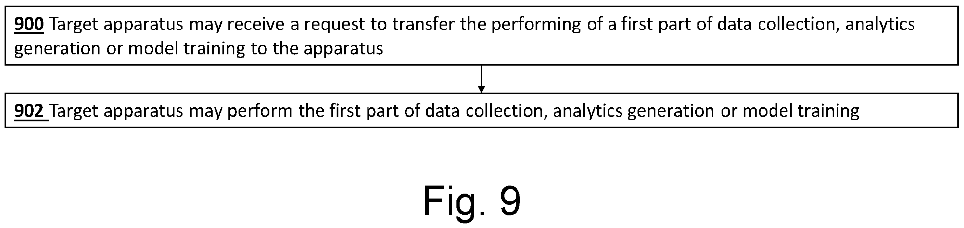

Figure 9 shows a block diagram of a method for partially transferring the performing of data collection, analytics generation and/or model training in a communication system, performed for example by a target apparatus (i.e. target network function such as NWDAFY).

In step 902 the target apparatus may receive a request to transfer the performing of a first part of data collection, analytics generation or model training to the target apparatus.

In step 904 the target apparatus may perform the first part of data collection, analytics generation or model training.

A source apparatus may not be an aggregator apparatus. The target apparatus may not be an aggregator apparatus. The target apparatus may receive, from an aggregator apparatus, analytics generation or model training, the request to transfer the performing of the first part of the data collection, analytics generation or model training to the target apparatus. The target apparatus may perform the first part of the data collection, analytics generation or model training. The target apparatus may send, to the aggregator apparatus, results of the first part of the data collection, analytics generation or model training.

A source apparatus may be an aggregator apparatus. The target apparatus may receive, from the source apparatus, the request to transfer the performing of the first part of the data collection, analytics generation or model training to the target apparatus. The target apparatus may perform the first part of the data collection, analytics generation or model training. The target apparatus may send, to the source apparatus, results of the first part of the data collection, analytics generation or model training.

A source apparatus may not be an aggregator apparatus. The target apparatus may be an aggregator apparatus. The target apparatus may receive, from the source apparatus, the request to transfer the performing of the first part of the data collection, analytics generation or model training to the apparatus and to aggregate results of the first part of the data collection, analytics generation or model training and the second part of the data collection, analytics generation or model training;

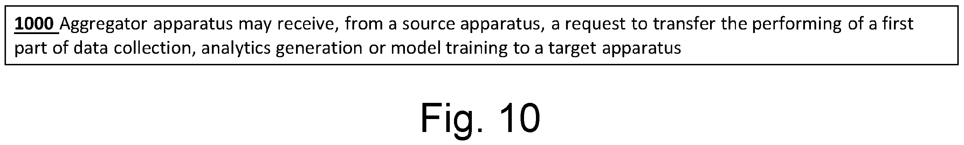

Figure 10 shows a block diagram of a method for partially transferring the performing of data collection, analytics generation and/or model training in a communication system, performed for example by an aggregator apparatus (i.e. aggregator network function such as NWDAFZ).

In step 1000, the aggregator apparatus may receive, from a source apparatus, a request to transfer the performing of a first part of data collection, analytics generation or model training to a target apparatus.

The request may be further to aggregate the first part of data collection, analytics generation, or model training with a second part of the data collection, analytics generation or model training.

The aggregator apparatus may receive, from the target apparatus, results of the first part of the data collection, analytics generation or model training. The aggregator apparatus may receive, from the source apparatus, results of the second part of the data collection, analytics generation or model training. The aggregator apparatus may aggregate results of the first part of the data collection, analytics generation or model training with results of the second part of the data collection, analytics generation or model training.

The aggregator apparatus may send, to a consumer, results of the aggregation of results of the first part of the data collection, analytics generation or model training and results of the second part of the data collection, analytics generation or model training.

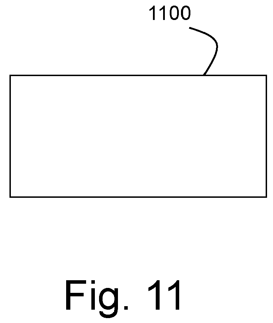

Figure 11 shows a schematic representation of non-volatile memory media 1100 storing instructions and/or parameters which when executed by a processor allow the processor to perform one or more of the steps of the methods of Figures 8 to 10.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figures 8 to 10, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. A source apparatus comprising at least one processor and at least one memory including computer code for one or more programs, the at least one memory and the computer code configured, with the at least one processor, to cause the source apparatus at least to:
receive instructions to perform data collection, analytics generation or model training;
determine to transfer the performing of a first part of the data collection, analytics generation or model training to a target apparatus; and
perform a second part of the data collection, analytics generation or model training.

2. The source apparatus of claim 1, wherein the at least one memory and the computer code are configured, with the at least one processor, to cause the source apparatus at least to:
receive instructions to perform data collection, analytics generation or model training related to a group of user equipment;
determine to transfer the performing of a first part of the data collection, analytics generation or model training related to a first part of the group of user equipment to the target apparatus; and
perform a second part of the data collection, analytics generation or model training related to a second part of the group of user equipment.

3. The source apparatus of claim 1 or claim 2, wherein the source apparatus is not an aggregator apparatus;
wherein the target apparatus is not an aggregator apparatus; and
wherein the at least one memory and the computer code are configured, with the at least one processor, to cause the source apparatus at least to:
discover an aggregator apparatus;
send, to the aggregator apparatus, a request to transfer the performing of the first part of the data collection, analytics generation or model training to the target apparatus; and
send, to the aggregator apparatus, results of the second part of the data collection, analytics generation or model training.

4. The source apparatus of claim 3, wherein the request is further to aggregate results of the first part of the data collection, analytics generation or model training with results of the second part of the data, analytics or model training.

5. The source apparatus of claim 1 or claim 2, wherein the source apparatus is an aggregator apparatus; and
wherein the at least one memory and the computer code are configured, with the at least one processor, to cause the source apparatus at least to:
send, to the target apparatus, a request to transfer the performing of the first part of the data collection, analytics generation or model training to the target apparatus;
receive, from the target apparatus, results of the first part of the data collection, analytics generation or model training;
aggregate results of the first part of the data collection, analytics generation or model training with results of the second part of the data, analytics or model training.

6. The source apparatus of claim 1 or claim 2, wherein the source apparatus is not an aggregator apparatus;
wherein the target apparatus is an aggregator apparatus; and
wherein the at least one memory and the computer code are configured, with the at least one processor, to cause the source apparatus at least to:
send, to the target apparatus, a request to transfer the performing of the first part of the data collection, analytics generation or model training to the target apparatus.

7. The source apparatus of claim 8, wherein the request is further to aggregate results of the first part of the data collection, analytics generation or model training and results of a second part of the data collection, analytics generation or model training.

8. The source apparatus of claim 6 or claim 7, wherein the at least one memory and the computer code are configured, with the at least one processor, to cause the source apparatus at least to:
send, to the target apparatus, results of the second part of the data or analytics collection or model training.

9. A target apparatus comprising at least one processor and at least one memory including computer code for one or more programs, the at least one memory and the computer code configured, with the at least one processor, to cause the target apparatus at least to:
receive a request to transfer the performing of a first part of data collection, analytics generation or model training to the target apparatus; and
perform the first part of data collection, analytics generation or model training.

10. The target apparatus of claim 9, wherein a source apparatus is not an aggregator apparatus;
wherein the target apparatus is not an aggregator apparatus; and
wherein the at least one memory and the computer code are configured, with the at least one processor, to cause the target apparatus at least to:
receive, from an aggregator apparatus, analytics generation or model training, the request to transfer the performing of the first part of the data collection, analytics generation or model training to the target apparatus;
perform the first part of the data collection, analytics generation or model training; and
send, to the aggregator apparatus, results of the first part of the data collection, analytics generation or model training.

11. The target apparatus of claim 9, wherein a source apparatus is an aggregator apparatus.

12. The target apparatus of claim 11, wherein the at least one memory and the computer code are configured, with the at least one processor, to cause the target apparatus at least to:
receive, from the source apparatus, the request to transfer the performing of the first part of the data collection, analytics generation or model training to the target apparatus;
perform the first part of the data collection, analytics generation or model training; and
send, to the source apparatus, results of the first part of the data collection, analytics generation or model training.

13. The target apparatus of claim 9, wherein a source apparatus is not an aggregator apparatus;
wherein the target apparatus is an aggregator apparatus; and
wherein the at least one memory and the computer code are configured, with the at least one processor, to cause the target apparatus at least to:
receive, from the source apparatus, the request to transfer the performing of the first part of the data collection, analytics generation or model training to the apparatus and to aggregate results of the first part of the data collection, analytics generation or model training and the second part of the data collection, analytics generation or model training;
perform the first part of the data collection, analytics generation or model training;
receive, from the source apparatus, results of the second part of the data collection, analytics generation or model training;
aggregate results of the first part of the data collection, analytics generation or model training with results of the second part of the data collection, analytics generation or model training.

14. An aggregator apparatus comprising at least one processor and at least one memory including computer code for one or more programs, the at least one memory and the computer code configured, with the at least one processor, to cause the aggregator apparatus at least to:
receive, from a source apparatus, a request to transfer the performing of a first part of data collection, analytics generation or model training to a target apparatus.

15. The aggregator apparatus of claim 14, wherein the request is further to aggregate the first part of data collection, analytics generation, or model training with a second part of the data collection, analytics generation or model training.

16. The aggregator apparatus of claim 15, wherein the at least one memory and the computer code are configured, with the at least one processor, to cause the aggregator apparatus at least to:
receive, from the target apparatus, results of the first part of the data collection, analytics generation or model training;
receive, from the source apparatus, results of the second part of the data collection, analytics generation or model training; and
aggregate results of the first part of the data collection, analytics generation or model training with results of the second part of the data collection, analytics generation or model training.

17. A method comprising:
receiving instructions to perform data collection, analytics generation or model training;
determining to transfer the performing of a first part of the data collection, analytics generation or model training to a target apparatus; and
performing a second part of the data collection, analytics generation or model training.

18. A method comprising:
receiving a request to transfer the performing of a first part of data collection, analytics generation or model training to a target apparatus; and
performing the first part of data collection, analytics generation or model training.

19. A method comprising:
receiving, from a source apparatus, a request to transfer the performing of a first part of data collection, analytics generation or model training to a target apparatus.
